# EUROPÄISCHE PATENTSCHRIFT

(11) **EP 0 836 568 B1**
(45) Veröffentlichungstag und Bekanntmachung des Hinweises auf die Patenterteilung: **25.07.2001**
(21) Anmeldenummer: 97918016.3
(22) Anmeldetag: 11.03.1997
(51) Int. Cl.: B60T 17/00

(54) **LUFTTROCKNUNGSANLAGE, INSBESONDERE FÜR SCHIENENFAHRZEUGE**
AIR-DRYING SYSTEM, IN PARTICULAR FOR RAIL VEHICLES
SYSTEME DE SECHAGE DE L'AIR, NOTAMMENT POUR VEHICULES SUR RAILS

(30) Priorität: 03.05.1996 DE 19617829
(43) Veröffentlichungstag der Anmeldung: 22.04.1998
(73) Patentinhaber: KNORR-BREMSE Systeme für Schienenfahrzeuge GmbH, 80809 München (DE)
(72) Erfinder: ZÖRNER, Wilfried, D-85258 Weichs (DE); FIEBIGER, Viktor, D-80997 München (DE)
(86) Internationale Anmeldenummer: DE9700487
(87) Internationale Veröffentlichungsnummer: WO9742068

(56) Entgegenhaltungen:
- DE-A- 3 525 083
- DE-A- 3 533 893

## Beschreibung

Die Erfindung betrifft eine Lufttrocknungsanlage, insbesondere für pneumatische Bremssysteme von Schienenfahrzeugen, die wenigstens zwei über eine Regenerationsleitung miteinander verbundene Lufttrocknungskammern aufweist, wobei im Regelfall umschaltbar eine der Kammern zur Lufttrocknung und die jeweils andere Kammer zur Regeneration des in den Kammern enthaltenen Lufttrocknungsmittels eingesetzt wird.

Derartige Lufttrocknungsanlagen sind aus dem Stand der Technik bekannt, siehe Z.B. DE-A-3533893, und werden beispielsweise von der Firma Knorr-Bremse vertrieben (Siehe Fig. 2). Nach Fig. 2 wird ein kaltgenerierender Adsorptionstrockner in Zweikammerausführung zweiphasig betrieben, d.h., eine Trocknungs- und eine Regenerationsphase laufen parallel zueinander ab. Während in einer Kammer (hier 1R; Kammer) der Hauptluftstrom getrocknet wird, wird das Trocknungsmittel in der anderen Kammer 1L regeneriert. Beim Durchströmen des Trocknungsmittels (Adsorbats) wird der Luft im Behälter 1R das in ihr enthaltene Wasser so weit entzogen, daß die relative Luftfeuchtigkeit des Hauptluftstromes kleiner gleich 35% ist.

Vom Hauptluftstrom wird ein Teil der getrockneten Luft abgezweigt, über eine Regenerationsleitung 4 mit Regenerationsdüse 47 entspannt und durch das gesättigte Trocknungsmittel der zweiten Kammer 1L in die Atmosphäre geblasen. Die extrem trockene Luft entzieht dem Trocknungsmittel die in der vorausgegangenen Trocknungsphase adsobierte Feuchtigkeit. Von Zeit zu Zeit wird der Funktionsablauf bedarfsgerecht zwischen den beiden Kammern umgeschaltet.

Bei Einsatz von zwei Kompressoren (zur Verkürzung der Auffüllzeit werden bei langen Zügen und hohem Luftverbrauch oft zwei Kompressoren verwendet) wird nach Erreichen eines bestimmten Systemdruckes einer der Kompressoren abgeschaltet. Der normale Funktionsbetrieb wird dann von einem Kompressor allein übernommen.

Aus Kostengründen wird der Luftstrom beider Kompressoren über einen einzigen Lufttrockner geleitet. Um ein Übersättigen der Lufttrocknungsanlage zu vermeiden, wird die Regenerationsdüse zudem für den Betrieb von zwei Kompressoren, d.h. im Grunde überdimensioniert, ausgelegt. Daraus resultiert ein zu hoher Luft- und Energieverbrauch bei Normalbetrieb. Die Erfindung zielt darauf ab, dieses Problem zu beheben.

Die Erfindung erreicht dieses Ziel durch den Gegenstand des Anspruches 1. Gegenüber dem gattungsgemäßen Stand der Technik ist dabei wenigstens eine weitere, bedarfsabhängig zu- und abschaltbare, Regenerationsleitung zwischen die Kammern geschaltet, wobei die beiden Leitungen (bevorzugt mit Regenerationsdüse versehen) bevorzugt zusammen einen Querschnitt aufweisen, der dem Querschnitt der herkömmlichen Düse entspricht. Durch Zuschalten der weiteren Leitung kann die Regeneration somit im Gegensatz zum Stand der Technik bedarfsabhängig erfolgen. Beim Betrieb nur eines Kompressors wird die Verbindung über die weitere Regenerationsdüse unterbrochen, so daß der Luftverbrauch im Normalbetrieb abgesenkt wird. Dies führt wiederum zu einer deutlichen Energieeinsparung.

Bei einem besonders bevorzugten Ausführungsbeispiel der Erfindung ist der weiteren Regenerationsdüse ein pneumatisch betätigter Kolben vorgeschaltet, der bevorzugt vom Speicherbehälter beaufschlagt wird. Ohne größeren konstruktiven Aufwand wird damit auf einfache Weise eine echt bedarfsabhängige Beschaltung der Regenerationsdüsen realisiert: überrschreitet der Speicherbehälterdruck einen bestimmten Schwellwert, schaltet die zweite Regenerationsdüse durch

Kolbenbetätigung ab. Der Umschaltdruck des Kolbens ist unkompliziert mittels einer Stellschraube vorzugeben.

Nachfolgend wird die Erfindung anhand von Ausführungsbeispielen unter Bezug auf die Zeichnung näher beschrieben. Es zeigt:
Fig. 1 eine schematische Teildarstellung erfindungswesentlicher Teile einer erfindungsgemäßen Lufttrocknungsanlage;
Fig. 2 eine schematische Darstellung einer Zweikammer-Lufttrocknungsanlage nach dem Stand der Technik.

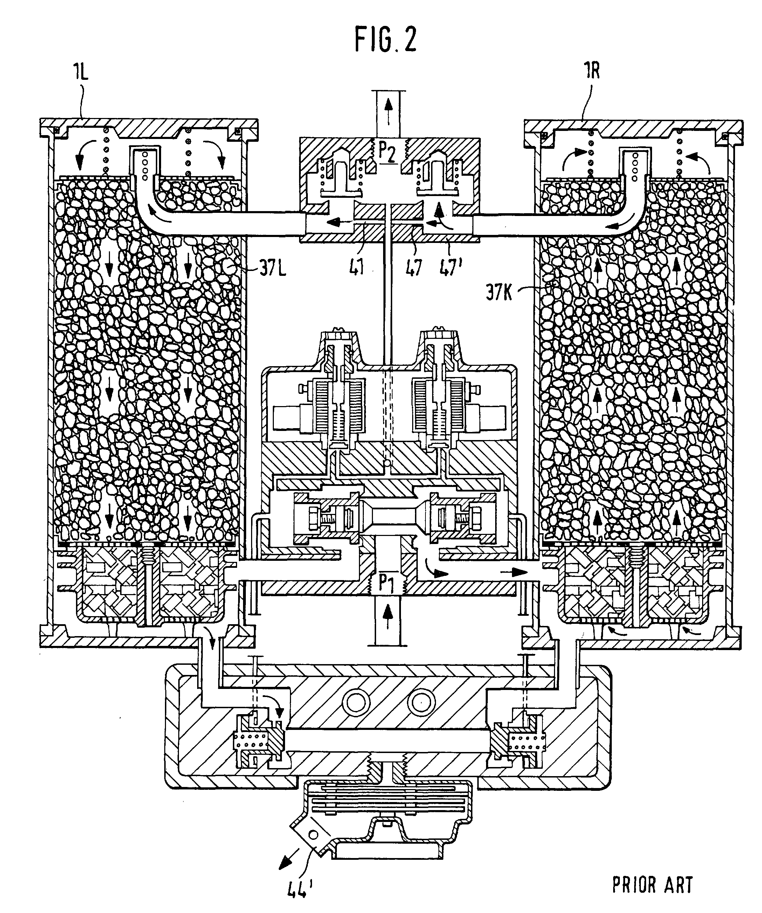

Fig. 2 (siehe auch die obige Beschreibung der Funktionsweise) zeigt eine Lufttrocknungsanlage nach dem Stand der Technik in einer Betriebsstellung, in der sich eine erste Kammer (1R) in einer Trocknungsphase und die weitere Kammer (1L) in der Regenerationsphase befindet. Bzgl. der Grundfunktion dieser Lufttrocknungsanlage sei auf die Gerätebeschreibung der Knorr-Bremse Systeme für Schienenfahrzeuge GmbH, München "B-MA 20.27" verwiesen. Wesentliche Elemente sind, ausgehend vom Durckluftanschluß P1 der Kompressoren, eine Baugruppe Ölabscheider A, die Kammern 1R und 1L mit Adsorbat, die Regeneration 47, Umschaltventile 12 und ein Entwässerungsventil 44.

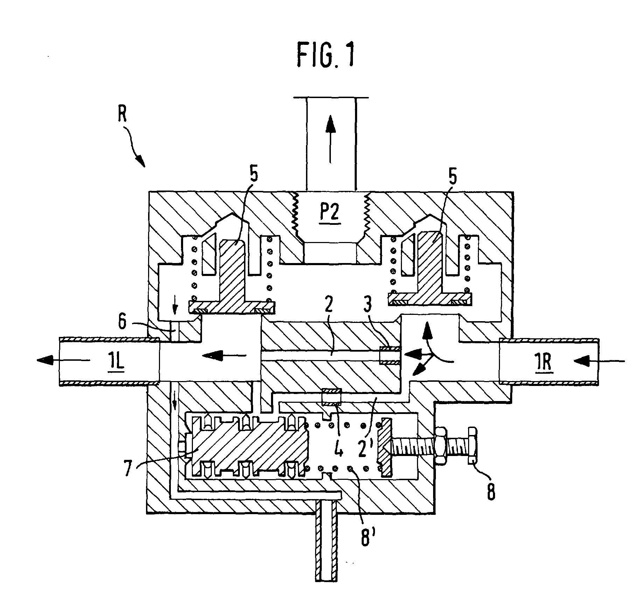

Gegenüber diesem Stand der Technik unterscheidet sich die Erfindung durch die Ausgestaltung der in Fig. 1 dargestellten Regenerationseinheit R. Erfindungsgemäß ist, neben einer ersten Regenerationsleitung 2 mit einer Regenerationsdüse 3, eine weitere Regenerationsleitung 2' mit einer Regenerationsdüse 4 vorgesehen. Beim Auffüllen eines pneumatischen Zugbremssystemes strömt - in der in Fig. 1 dargestellten Betriebsstellung - Regenerationsluft über die Regenerationsdüsen 3 und 4 vom Druckbehälter 1R zum Druckbehälter 1L. Der Hauptanteil der aus dem Behälter 1 R austretenden Luft wird über ein Ventil 5 in ein (nicht dargestelltes)

Bremssystem mit einem Betriebsdruck P2 geleitet. Über einen Kanal 6 wird ein Kolben 7 mit dem Druck P2 beaufschlagt. Der Kolben 7 ist derart ausgelegt, daß er den Luftweg durch die Leitung 2' in einer seiner Schaltstellungen versperrt und in seiner anderen Schaltstellung freischaltet.

Bei Erreichen eines bestimmten Systemdruckes, der mit einer Stellschraube 8 beliebig eingestellt werden kann, schaltet der Kolben 7 um und sperrt den Weg über die zweite Regenerationsdüse 4. Für den weiteren Betrieb (i.allg. mit nur einem Kompressor) kann die Regeneration damit nur noch über die Regenerationsdüse 3 erfolgen, was den Luft- und Energieverbrauch absenkt.

Die Zu- und Abschaltung der zweiten Regenerationsdüse 4 ist damit von der Schaltstellung der Kompressoren unabhängig; sie orientiert sich ausschließlich am Systemdruck P2. Wenn dieser Druck hoch genug ist, wird allerdings im Regelfall auch der zweite Kompressor abgeschaltet, so daß eine geringere Regeneration ausreicht. Der Kolben 7 ist derart ausgebildet, daß er beim Umschalten in seinem Seitenbereich die Regenerationsleitung 2' öffnet oder verschließt.

### Bezugszeichenliste

- Kammern: 1R, 1L
- Regenerationsleitung: 2, 2'
- Regenerationsdüse: 3, 4
- Ventile: 5
- Kanal: 6
- Kolben: 7
- Stellschraube: 8

## Patentansprüche

1. Lufttrocknungsanlage, insbesondere für pneumatische Bremssysteme von Schienenfahrzeugen, die wenigstens zwei über eine Regenerationsleitung (2) miteinander verbundene Lufttrocknungskammern (1L, 1R) aufweist, wobei im Regelfall umschaltbar eine der Kammern zur Lufttrocknung und die jeweils andere Kammer zur Regeneration des in den Kammern enthaltenen Lufttrocknungsmittels eingesetzt wird, **dadurch gekennzeichnet,** daß wenigstens eine weitere, bedarfsabhängig zu- und abschaltbare, Regenerationsleitung (2') zwischen die Kammern (1L, 1R) geschaltet ist.

2. Lufttrocknungsanlage nach Anspruch 1, **dadurch gekennzeichnet,** daß die Regenerationsleitungen (2, 2') jeweils eine Regenerationsdüse (3, 4) aufweisen.

3. Lufttrocknungsanlage nach Anspruch 1 oder 2, **dadurch gekennzeichnet,** daß in die weitere Regenerationsleitung (2') mit Regenerationsdüse (4) ein pneumatisch betätigter Kolben (7) geschaltet ist, der den Luftweg durch die Leitung (2') in einer seiner Schaltstellungen versperrt und in seiner anderen Schaltstellung freischaltet.

4. Lufttrocknungsanlage nach Anspruch 3, **dadurch gekennzeichnet,** daß der pneumatisch betätigbare Kolben (7) vom Betriebsbremsdruck beaufschlagt wird.

5. Lufttrocknungsanlage nach Anspruch 3 oder 4, **dadurch gekennzeichnet,** daß der Umschaltdruck des Kolbens (7) mittels einer Stellschraube (8) einstellbar ist.

6. Lufttrocknungsanlage nach Anspruch 3, 4 oder 5, **dadurch gekennzeichnet,** daß der Kolben (7) derart ausgebildet ist, daß er beim Umschalten in seinem Seitenbreich die Regenerationsleitung (2') freigibt oder verschließt.

## Claims

1. Air-drying installation, in particular for pneumatic brake systems in rail vehicles, having at least two air-drying chambers (1L, 1R) joined together by means of a regeneration line (2), wherein, generally interchangeably, one of the chambers is used for air-drying and the respective other chamber is used for the regeneration of the air-drying medium contained in the chambers, characterised in that at least one further regeneration line (2'), that can be connected and disconnected according to requirements, is connected between the chambers (1L, 1R).

2. Air-drying installation according to claim 1, characterised in that the regeneration lines (2, 2') each have a regeneration nozzle (3, 4).

3. Air-drying installation according to claim 1 or 2, characterised in that a pneumatically actuated piston (7) is connected into the further regeneration line (2') having a regeneration nozzle (4) and blocks the airway through the line (2') in one of its switch positions and clears it in its other switch position.

4. Air-drying installation according to claim 3, characterised in that the pneumatically actuatable piston (7) is acted on by the operating brake pressure.

5. Air-drying installation according to claim 3 or 4, characterised in that the change-over pressure of the piston (7) can be set by means of an adjustment screw (8).

6. Air-drying installation according to claim 3, 4 or 5, characterised in that the piston (7) is constructed in such a way that it clears or blocks the regeneration line (2') during change-over in its side region.

## Revendications

1. Dispositif de séchage d'air, notamment pour des systèmes pneumatiques de freinage de véhicules sur rails, qui comporte au moins deux chambres de séchage d'air (1L, 1R) reliées l'une à l'autre par l'intermédiaire d'un conduit de régénération (2), l'une des chambres étant utilisée pour le séchage de l'air et l'autre chambre respective pour la régénération de l'agent de séchage d'air contenu dans les chambres, avec en général une possibilité d'inversion, caractérisé en ce qu'au moins un conduit de régénération supplémentaire (2'), qui peut être mis en circuit et hors circuit en fonction des besoins, est branché entre les chambres (1L, 1R).

2. Dispositif de séchage d'air selon la revendication 1, caractérisé en ce que les conduits de régénération (2, 2') comportent chacun un ajutage de régénération (3, 4).

3. Dispositif de séchage d'air selon la revendication 1 ou 2, caractérisé en ce que dans le conduit de régénération supplémentaire (2') muni d'un ajutage de régénération (4), est monté un piston (7) à actionnement pneumatique, qui obstrue le trajet de l'air à travers le conduit (2'), dans l'une de ses positions de commutation, et le libère dans son autre position de commutation.

4. Dispositif de séchage d'air selon la revendication 3, caractérisé en ce que le piston (7) à actionnement pneumatique est sollicité par la pression du frein de service.

5. Dispositif de séchage d'air selon la revendication 3 ou 4, caractérisé en ce que la pression de commutation du piston (7) est réglable au moyen d'une vis de réglage (8).

6. Dispositif de séchage d'air selon la revendication 3, 4 ou 5, caractérisé en ce que le piston (7) est d'une configuration telle, que lors de la commutation, il libère ou obture, dans sa région latérale, le conduit de régénération (2').
